# EUROPÄISCHE PATENTSCHRIFT

(11) **EP 2 430 363 B1**
(45) Veröffentlichungstag und Bekanntmachung des Hinweises auf die Patenterteilung: **06.12.2017**
(21) Anmeldenummer: 10721289.6
(22) Anmeldetag: 03.04.2010
(51) Int. Cl.: F23C 9/00, F23J 15/06, F23J 15/08, F23L 7/00

(54) **KRAFTWERK SOWIE VERFAHREN ZUM BETREIBEN DESSELBEN**
POWER STATION AND METHOD FOR OPERATING THE SAME
CENTRALE ET PROCÉDÉ D'EXPLOITATION DE CETTE CENTRALE

(30) Priorität: 16.05.2009 DE 102009021623
(43) Veröffentlichungstag der Anmeldung: 21.03.2012
(73) Patentinhaber: Forschungszentrum Jülich GmbH, 52425 Jülich (DE)
(72) Erfinder: NAZARKO, Jewgeni, 52353 Düren (DE); RIENSCHE, Ernst, 52428 Jülich (DE); MENZER, Reinhard, 52152 Simmerath (DE); MEULENBERG, Wilhelm Albert, NL-6294 AA Vijlen (NL); BAUMANN, Stefan, 52078 Aachen (DE)
(86) Internationale Anmeldenummer: PCT/DE2010/000385
(87) Internationale Veröffentlichungsnummer: WO 2010/133193

(56) Entgegenhaltungen:
- WO-A1-2008/087150
- WO-A2-2009/065374
- WO-A2-2009/106026
- DE-A1-102005 025 345
- US-A1- 2004 002 030

## Beschreibung

Die Erfindung betrifft ein Kraftwerk zur Energieumwandlung, insbesondere ein Kraftwerk, bei dem die Energieumwandlung in einer Rauchgas/Sauerstoffatmosphäre (Oxyfuel-Prozess) stattfindet. Ferner betrifft die Erfindung ein Verfahren zum Betreiben eines solchen Kraftwerks.

### Stand der Technik

Eine der bedeutendsten Quellen für die Zunahme der Kohlendioxidkonzentration in der Atmosphäre ist die Verbrennung fossiler Energieträger in Feuerungsanlagen mit dem Ziel der Energieumwandlung. Daher wird versucht, CO₂ aus der Verbrennung fossiler Energieträger abzutrennen und danach einzulagern, um es nicht in die Atmosphäre gelangen zu lassen. Grund für diese Bemühungen sind der Treibhauseffekt und die daraus resultierende globale Erwärmung.

Derzeit gibt es drei prinzipielle Konzepte der Abscheidung von Kohlendioxid, die sich in der Positionierung der CO₂-Abtrennung im Energieumwandlungsprozess unterscheiden. Dies sind die CO₂-Abtrennung nach der Energieumwandlung (Post-Combustion), die CO₂-Abtrennung vor der Energieumwandlung (Pre-Combustion) und die Erzeugung eines CO₂-reichen Rauchgases durch die Energieumwandlung in einer Rauchgas-Sauerstoff-Atmosphäre (sog. Oxyfuel-Prozess).

Im Oxyfuel-Prozess erfolgt die Anreicherung von CO₂ durch das Auskondensieren des Wasserdampfes nach der Verbrennung des kohlenstoffhaltigen Brennstoffes mit reinem Sauerstoff. Der reine Sauerstoff kann dabei entweder durch eine konventionelle kryogene Luftzerlegung oder mittels einer Membran aus der Luft gewonnen werden. Zur Begrenzung der Verbrennungstemperatur muss regelmäßig ein Teil des Rauchgases in den Verbrennungsprozess zurückgeführt werden.

Ein großes Entwicklungspotenzial bei der Sauerstoffgewinnung aus der Luft wird, insbesondere aufgrund von energetischen Gesichtspunkten, sauerstoffleitenden Hochtemperatur-Membranen zugesprochen. Eine solche ionenleitende Membran benötigt regelmäßig eine Betriebstemperatur im Bereich von 600 bis 1000 °C. Die Triebkraft des Sauerstofftransportes kommt durch den Unterschied im Sauerstoffpartialdruck auf der Feed- und Permeatseite der Membraneinheit zustande und wird im Wesentlichen mittels der Wagner-Gleichung quantifiziert. Beim Vorliegen einer ausreichenden Triebkraft für den Sauerstofftransport führen Membraneffekte zu einer Anreicherung des Sauerstoffes auf der Permeatseite.

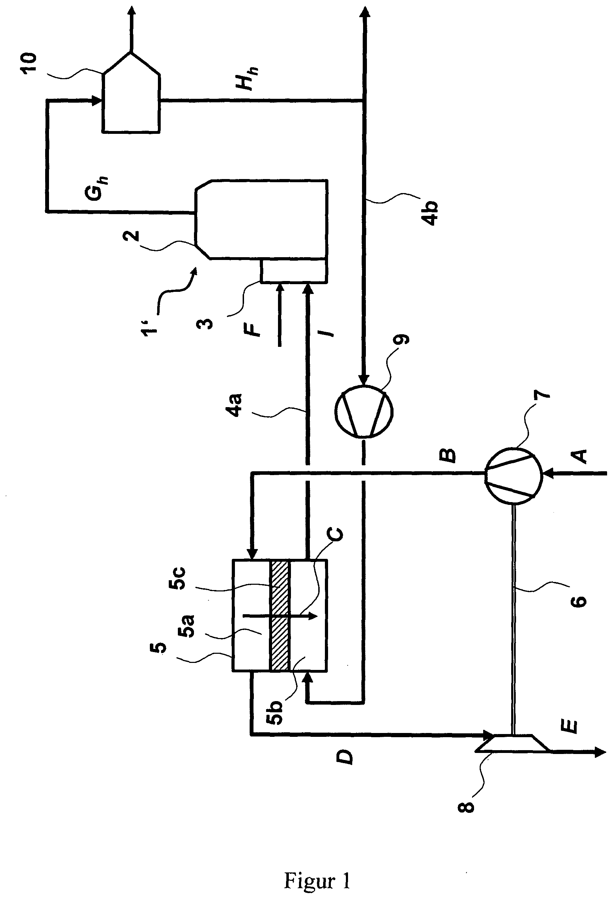

Die membranbasierten Oxyfuel-Konzepte werden in zahlreichen Forschungs- und Industrieprojekten entwickelt. Eins davon ist das in Figur 1 skizzierte Oxycoal-AC-Konzept, welches in einem Verbundvorhaben an der RWTH Aachen zur Entwicklung eines CO₂-emissions-freien Kohleverbrennungsprozesses zur Stromerzeugung entwickelt wurde.

Ein wesentliches Merkmal dieses Konzeptes ist die Kombination von zwei Verfahren zur Triebkrafterzeugung in der Sauerstoff leitenden Hochtemperatur-Membraneinheit. Einerseits wird auf der Feedseite die Frischluft verdichtet und anschließend zur teilweisen Energierückgewinnung wieder entspannt, andererseits wird die Permeatseite der Membran mittels des zurückgeführten Rauchgases (Verbrennungsgas) mit dem Temperaturniveau der Betriebstemperatur der Membraneinheit gespült, so dass der permeierende Sauerstoff auf der Permeatseite abtransportiert wird. Das mit Sauerstoff angereicherte Rauchgas, welches anschließend dem Brenner zugeführt wird, besteht im Wesentlichen aus CO₂, H₂O und O₂, und weist in der Regel einen Sauerstoffgehalt von ca. 17 Vol.-% auf. Beide Verfahren zur Triebkrafterzeugung führen dazu, dass sich zwischen der Feed- und Permeatseite ein Partialdruckunterschied für Sauerstoff ausbildet.

Das beschriebene Konzept weist allerdings einige Nachteile auf:
- Der Antrieb der Turbokomponenten für die Luftverdichtung führt zu einem hohen Energieverbrauch.
- Die Reinigung des zurückzuführenden Rauchgases bei Temperaturen, die der Membran-Betriebstemperatur entsprechen (Heißgasreinigung), ist im erforderlichen Maßstab derzeit nicht verfügbar.
- Rauchgasgebläse zur Förderung des zurückzuführenden Rauchgases bei Temperaturen, die der Membran-Betriebstemperatur entsprechen (Heißgasgebläse), sind im erforderlichen Maßstab derzeit nicht verfügbar.
- Ein konventioneller Frischluft-Rauchgas-Wärmeaustauscher, der bei dem Druckverhältnis von bis zu 20 bar zu 1 bar arbeitet, ist nur mit hohen Kosten realisierbar.
- Das hohe Druckgefälle zwischen der Feed- und Permeatseite der Membran führt zu hohen Stabilitätsanforderungen an die Membran.

Aus US 2004/0002030 A1 ist beispielsweise eine Verbrennungsanlage mit einem Brenner, einer Brennkammer und einer durch zwei Leitungen mit dieser verbundenen Membraneinheit umfassend eine Hochtemperatur Membran zur Gewinnung des Verbrennungssauerstoffes aus der Luft bekannt. Die Verbrennungsanlage weist eine Kreislaufführung für rezirkuliertes Rauchgases auf, wobei in der Rauchgasleitung als Spülleitung vor dem Eintritt in die Membraneinheit (Permeatseite) ein Wärmeaustauscher angeordnet ist. Der Wärmeaustauscher kann dabei innerhalb oder in der Nähe der Brennkammer angeordnet sein.

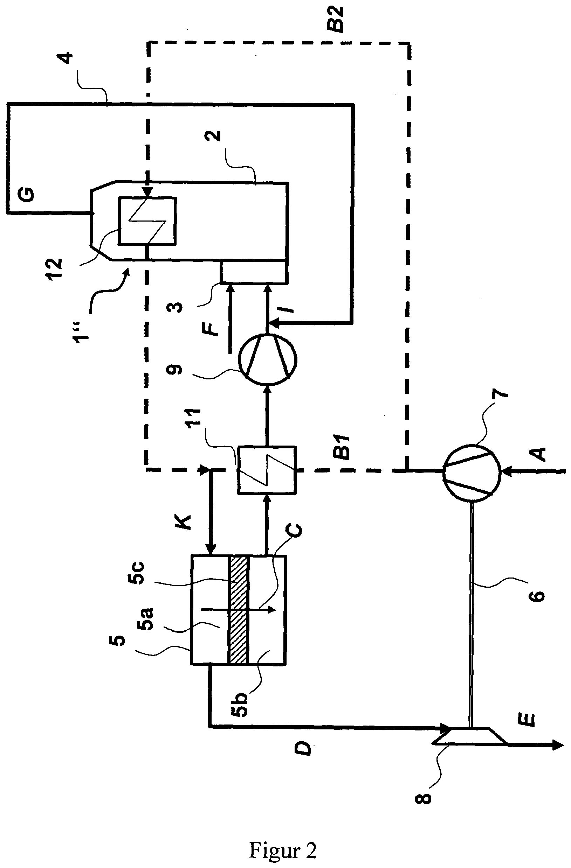

Ein weiteres membranbasiertes Oxyfuel-Konzept wurde von Siemens AG entwickelt, welches im Folgenden Clean-Konzept genannt wird und in Figur 2 dargestellt ist. Im Unterschied zum Oxycoal-AC-Konzept wird die Permeatseite der Membran beim Clean-Konzept nicht mehr mittels des Rauchgases gespült. Der durch die Membran permeierende Sauerstoff wird gegebenenfalls mittels einer Pumpe aus der Membraneinheit gefördert und anschließend dem in die Verbrennung zurückgeführten Rauchgas beigemischt. Die Aufrechterhaltung der erforderlichen Prozesstemperatur der Membraneinheit wird allein durch eine Aufheizung der Luft nach der Luftverdichtung mittels eines Wärmeaustausches gewährleistet. Zur Gewährleistung der notwendigen Betriebstemperatur der Membran entnimmt der Wärmetauscher die dazu notwendige Wärme dem bei dem Betrieb des Brenners entstehenden Rauchgas.

Vorteile dieses Konzeptes von Siemens sind die Vermeidung der Heißgasreinigung, die Vermeidung der eventuellen Schädigung der Membran durch die Bestandteile des Rauchgases, die Verkürzung der Rauchgas-Rezirkulationsleitung, sowie die Möglichkeit der Integration des Membranmoduls in Oxyfuel-Verfahren der ersten Generation, die durch die Sauerstoffbereitstellung mittels einer Luftzerlegungsanlage sowie durch die kalte Rauchgasrückführung gekennzeichnet sind.

Jedoch weist auch dieses Konzept einige Nachteile auf:
- Der Antrieb der Turbokomponenten für die Luftverdichtung führt zu einem hohen Energieverbrauch.
- Die Prozessführung bewirkt eine Verringerung der Triebkraft durch die Membran (beim konstanten Energieverbrauch wie beim Oxycoal-AC-Konzept).
- Das hohe Druckgefälle zwischen der Feed- und Permeatseite der Membran führt zu hohen Stabilitätsanforderungen an die Membran.

### Aufgabe und Lösung

Aufgabe der Erfindung ist es, ein Verfahren zum Betreiben einer Oxyfuel-Verbrennungsanlage mit einer sauerstoffleitenden Membran bereit zu stellen, welches die vorgenannten Nachteile aus dem Stand der Technik überwindet. Ferner ist es die Aufgabe der Erfindung eine geeignete Vorrichtung zur Durchführung des vorgenannten Verfahrens bereit zu stellen.

Die Aufgaben der Erfindung werden gelöst durch ein Verfahren gemäß Hauptanspruch sowie durch eine Vorrichtung mit der Gesamtheit der Merkmale gemäß Nebenanspruch. Vorteilhafte Ausführungsformen des Verfahrens sowie der Vorrichtung sind den jeweils darauf rückbezogenen Unteransprüchen zu entnehmen.

### Gegenstand der Erfindung

Die Erfindung basiert auf dem Oxyfuel-Konzept, bei dem die Energieumwandlung in einer Rauchgas/Sauerstoffatmosphäre (Oxyfuel-Prozess) stattfindet. Der dazu benötigte Sauerstoff wird mittels einer sauerstoffleitenden Hochtemperatur-Membran zur Verfügung gestellt. Um die resultierende Brennkammertemperatur beeinflussen zu können, wird eine bestimmte Menge des abgekühlten Abgases bzw. Rauchgases rezirkuliert, d. h. mit dem Brennstoff und dem Sauerstoff zusammen in die Brennkammer eingeblasen. Die Brennkammertemperatur ist dabei abhängig von der Temperatur des rezirkulierten Rauchgasmassenstroms, dessen Verhältnis zum Brennstoffmassenstrom und dem Luftverhältnis, und liegt je nach Art des Kraftwerkes in der Regel zwischen 1050 bis 1200 °C.

Erfindungsgemäß wird ein sauerstoffhaltiges Gas, insbesondere Luft, jedoch nicht wie beim Stand der Technik zuvor hoch verdichtet und anschließend der sauerstoffleitenden Membran zugeleitet, sondern der Membran lediglich unter moderaten Drücken (bis max. 2 bar) zugeführt. Die Permeatseite der sauerstoffleitenden Membraneinheit wird mit Rauchgas gespült und anschließend der Verbrennungsanlage wieder zurückgeführt.

In Folgenden wird unter Verbrennungsanlage jede Anlage verstanden, in der ein gasförmiger, flüssiger und/oder fester kohlenstoffhaltiger Brennstoff zur Nutzung der erzeugten Wärme oxidiert wird. Dazu zählen beispielsweise Gasbrenner, die mit Erdgas, Flüssiggas, Stadtgas oder Deponiegas betrieben werden, Ölbrenner, die z. B. mit Erdöl, Heizöl oder auch Alkoholen betrieben werden, und auch Rostfeuerungen für stückige Brennstoffe, wie beispielsweise gasreiche Steinkohle, Holzhackschnitzel oder Abfälle, Wirbelschichtfeuerungen oder Staubfeuerungen.

Rauchgas oder Verbrennungsgas nennt man das bei der technischen Verbrennung von Brennstoffen entstehende Verbrennungsprodukt mit festen, flüssigen und/oder gasförmigen Verunreinigungen. Zu den gasförmigen Verunreinigungen zählen beispielsweise Stickstoff, Kohlendioxid, Kohlenmonoxid, Schwefeldioxid, Stickstoffoxid und Wasserdampf. Als Festkörper treten insbesondere Flugasche und Ruß auf.

Bei dem erfindungsgemäßen Verfahren wird das sauerstoffhaltige Gas zur Gewährleistung der erforderlichen Betriebstemperatur der sauerstoffleitenden Membran von typischerweise 600 bis 1000 °C vorgewärmt. Das sauerstoffhaltige Gas wird mittels des Rauchgases in und/oder außerhalb der Brennkammer aufgeheizt. Dies kann zusätzlich beispielsweise durch eine Vorwärmung mittels der sauerstoffabgereicherten Abluft (Retentat der Membran) rekuperativ erfolgen. Unter außerhalb wird verstanden, dass der Wärmeaustausch zwar außerhalb der Brennkammer stattfindet, aber das Rauchgas noch annähernd das Temperaturniveau der Brennkammer aufweist.

In einer besonders vorteilhaften Ausführung werden beide Möglichkeiten der Vorwärmung des sauerstoffhaltigen Gases eingesetzt, und zwar zunächst rekuperativ durch die sauerstoff-ärmere Abluft aus der sauerstoffleitenden Membran und anschließend durch das Rauchgas selbst. Dabei erfolgt eine Erwärmung des sauerstoffhaltigen Gases bis hin zur Betriebstemperatur der Membran von ca. 600 bis 1000 °C.

Zur Aufrechterhaltung der Betriebstemperatur der sauerstoffleitenden Membran kann als zusätzliche Option ein externes Aufheizen des sauerstoffhaltigen Gases, beispielsweise durch eine externe Feuerung, erfolgen.

Die sauerstoffabgereicherte Abluft auf der Retentatseite der sauerstoffleitenden Membran kann zur Rückgewinnung von Wärme in einem Rekuperator vorzugsweise bis auf die Umgebungstemperatur abgekühlt werden. Damit wird die Wärmenutzung der Abluft erheblich verbessert.

Zur Erhöhung der Triebkraft an der Membran kann anstelle von Luft als einem bevorzugten sauerstoffhaltigen Gas alternativ auch eine mit Sauerstoff angereicherte Luft verwendet werden. Der Sauerstoff wird in diesem Fall beispielsweise durch den Einsatz einer (Polymer-) Membran und/oder einer energetisch optimierten Luftzerlegungsanlage mit einer geringeren O₂-Reinheit angereichert werden.

Je nach dem optimalen Auslegungspunkt der Anlage zur Sauerstoffanreicherung kann es zur energetischen Optimierung des Gesamtprozesses vorteilhaft sein, die erzeugte, mit Sauerstoff angereicherte Luft mit der Umgebungsluft zu verdünnen.

Beim Oxyfuel-Konzept können auf Grund der Verbrennung mit nahezu reinem Sauerstoff deutlich höhere Verbrennungstemperaturen (bis über 4000 °C) entstehen, als bei einer Verbrennung mit Luft. Die Wärme des Rauchgases aus dem Verbrennungsprozess wird diesem vorzugsweise so weit entzogen, wie es unter der Berücksichtigung der Rauchgaszusammensetzung technisch und wirtschaftlich vertretbar ist. Das rezirkulierte Rauchgas ersetzt somit den sonst üblichen Luftstickstoff.

Das abgekühlte Rauchgas wird anschließend der Rauchgasreinigung zugeführt. Die Rauchgasreinigung kann mehrere Komponenten umfassen, die je nach Rauchgaszusammensetzung und Anforderungen der nachgeschalteten Membran unter Umständen verschieden sein können. Die einzelnen Schritte einer typischen Rauchgasreinigung sind dabei aus dem Stand der Technik bekannt.

Nach der Rauchgasreinigung kann der rezirkulierte und mittels des Rauchgas-Gebläses geförderte Teil des Rauchgases anschließend durch einen Wärmeaustausch mit Rauchgas, welches das entsprechende Temperaturniveau des Verbrennungsprozesses in bzw. außerhalb der Brennkammer aufweist, auf einfache Weise wieder auf die Betriebstemperatur der Membran aufgeheizt werden. Anschließend gelangt der rezirkulierte Teil des Rauchgases zur sauerstoffleitenden Membran und dient dabei als Spülgas zur Aufrechterhaltung der Triebkraft und zum Abtransport des durch die Membran permeierten Sauerstoffes.

In einer besonderen Ausführung der Erfindung wird das Permeat aus der Membraneinheit, bestehend aus dem zurückgeführten Rauchgas und dem permeierten Sauerstoff, mittels einer Pumpe zur Brennkammer gefördert.

Zur Aufrechterhaltung der Betriebstemperatur der Membran kann zusätzlich auch eine externe Aufheizung (beispielsweise externe Feuerung) des zurückgeführten Teiles des Rauchgases vorgesehen werden.

Die Frischluft wird durch einen Teil des Permeates aus der Membran, bestehend aus dem rezirkulierten Rauchgas und dem permeierten Sauerstoff, in einem Wärmeaustauscher vorgewärmt. Dabei kühlt sich das abgezweigte Gemisch aus dem abgetrennten Sauerstoff und dem zurückgeführten Rauchgas vorteilhaft auf die für die Förderung des Brennstoffes in die Brennkammer optimale Temperatur ab.

Für den Fall, dass das Rauchgas als Spülgas dient und allein, also ohne Turbomaschinerie zur Triebkrafterzeugung, ausreichen soll, muss viel Rauchgas an der Membran vorbeiströmen. Wenn das Rauchgas zuvor abgekühlt wird, sinkt jedoch die Temperatur der Betriebskammer stark ab. Aus diesem Grund wäre es vorteilhaft, wenn das zurückgeführte Rauchgas nach der Membran heiß bleiben würde. Dies lässt sich beispielsweise dadurch bewerkstelligen, dass nur ein Teil des Rauchgases abgekühlt wird, welcher dann zur Brennstoffförderung in die Verbrennung verwendet wird. Als Folge könnte sich dann jedoch bei der Luft auf der Feedseite (21 Vol-%) auf der Permeatseite ein geringer Sauerstoffgehalt einstellen, z. B. 10-15 Vol-%. Die Verbrennung mit einem geringeren Sauerstoffgehalt ist aber noch relativ unbekannt. Eine Abkühlung des ganzen Permeates ist daher in der Regel nur dann sinnvoll, wenn die Triebkrafterzeugung gegebenenfalls auch durch andere Mittel, wie eine Turbomaschinerie oder durch eine sauerstoffangereicherte Luft, auf der Feedseite unterstützt wird.

In einer weiteren Ausführung kann die Frischluft in mehrere Teilströme zerlegt werden, wobei jeder Teilstrom auch getrennt durch die vorgenannten Möglichkeiten erwärmt werden kann. Nach der Zusammenführung der Frischluft-Teilströme muss die Aufrechterhaltung der Betriebstemperatur der Membran gewährleistet werden können.

Als zusätzliche Option kann auch vorgesehen werden, dass der rezirkulierte Teil des Rauchgases in einem Rekuperator vor dem Aufheizen durch den Wärmeaustauscher im Rauchgas des entsprechenden Temperaturniveaus des Verbrennungsprozesses in bzw. außerhalb der Brennkammer durch das Permeat aus der Membran, bestehend aus dem abgetrennten Sauerstoff und dem zurückgeführten Rauchgas, vorgewärmt wird. Dadurch kühlt sich das Gemisch aus dem abgetrennten Sauerstoff und dem zurückgeführten Rauchgas auf die für den Eintritt in die Brennkammer optimale Temperatur ab.

Die Vorteile des erfinderischen Verfahrens gegenüber dem Oxycoal-AC-Konzept und dem Clean-Konzept von Siemens sind folgende:
- eine verbesserte Wärmenutzung der sauerstoffarmen Abluft bei der Vorwärmung der Frischluft bzw. sauerstoffangereicherten Luft,
- ein geringerer Energieverbrauch des Gesamtprozesses durch die Rauchgasspülung und den Verzicht auf Turbokomponenten,
- die Notwendigkeit der Reinigung des heißen, zurückzuführenden Rauchgases entfällt, die Reinigung des kalten Rauchgases ist Stand der Technik,
- die Notwendigkeit der Förderung des heißen, zurückzuführenden Rauchgases mittels des Rauchgasgebläses entfällt, die Förderung des kalten Rauchgases ist Stand der Technik,
- die Notwendigkeit eines Wärmetausches zwischen zwei Gasströmen mit einem hohen Druckverhältnis (beispielsweise 20 zu 1) entfällt, da sowohl Rauchgas als auch Frischluft nahezu drucklos vorliegen,
- die nahezu drucklosen Rauchgas- und Frischluftströme stellen an die Membran geringere Stabilitätsanforderungen.

### Spezieller Beschreibungsteil

Im Folgenden wird die Erfindung anhand von Ausführungsbeispielen näher erläutert, ohne dass dadurch der Schutzbereich der Erfindung eingeschränkt wird. Der zuständige Kraftwerks-Fachmann wird alternative Ausgestaltungen leicht als mit zur Erfindung gehörig ansehen können.

Die Figur 1 zeigt das Verfahrensschema des Oxycoal-AC-Konzepts, welches in einem Verbundvorhaben an der RWTH Aachen zur Entwicklung eines CO₂-emissionsfreien Kohleverbrennungsprozesses zur Stromerzeugung entwickelt wurde. (Siehe dazu auch: Reinhold Kneer, Malte Förster, Dirk Abel, Horst r: Maier, Michael Modigell, Reinhard Niehuis, Norbert Peters (2006) OXYCOAL-AC - Innovative Herausforderungen für eine saubere Lösung der zukünftigen Stromerzeugung, VGB PowerTech, 10, 74-81). Die aus dem Stand der Technik bekannte Verbrennungsanlage *1*' weist eine Brennkammer *2* mit einem vorgeschalteten Brenner 3 auf. Bei einer Dampferzeugungsanlage bilden Brennkammer und Dampferzeugung häufig eine Einheit. In diesem wird ein Brennstoff *F* zusammen mit Rauchgas *I,* welches mit Sauerstoff angereichert ist, verbrannt, wobei das Wasser im Rohrsystem des Dampferzeugers (nicht dargestellt) zu Dampf mit einer hohen Temperatur umgewandelt wird. Das heiße Rohrauchgas *Gₕ* gelangt über die Zirkulationsleitung *4b* nach einer Reinigung in einer Heißgasreinigungsstufe *10* als gereinigtes heißes Rauchgas *Hₕ* über ein Heißgasgebläse *9* als Spülgas in die Membraneinheit *5.*

Der Sauerstoff *C* für die Verbrennung wird beim Oxycoal-Verfahren mittels einer Membran *5c* einer Membraneinheit *5,* deren Retentatseite *5a* mit verdichteter Luft *B* versorgt wird, aus dieser abgetrennt und an den zirkulierenden Rauchgasstrom I abgegeben, der über die Zirkulationsleitung *4a* dem Brenner *3,* bzw. der Brennkammer *2,* zugeführt wird. Die Temperatur der durch die Verdichtung aufgeheizten Luft (20 bar, ca. 400°C) reicht in der Regel aber für die Aufrechterhaltung der Betriebstemperatur der Membran nicht aus. Deshalb muss Luft weiter aufgeheizt werden.

Die zur Aufrechterhaltung der erforderlichen Prozesstemperatur für die Hochtemperaturmembran benötigte Wärmemenge wird daher hauptsächlich durch das zirkulierende heiße Rauchgas *Hₕ* zur Verfügung gestellt, welches der Permeatseite *5b* zugeführt und zusammen mit dem abgetrennten Sauerstoff *I* wieder abgeführt wird. Durch diese Betriebsführung wird regelmäßig eine hohe Triebkraft in der Membraneinheit und damit eine hohe Permeabilität für den Sauerstoff *C* sichergestellt.

Das dem Brenner zugeführte, mit Sauerstoff angereicherte, Rauchgas *I* weist in der Regel einen Sauerstoffgehalt von ca. 17 Vol.-% auf.

Die abgereicherte Luft *D* aus der Membraneinheit *5* wird anschließend einem Expander *8* zugeführt, der über eine Welle *6* mit dem Verdichter *7* gekoppelt ist, und als Abluft *E* an die Umgebung abgegeben. Über den Verdichter *7* wird Luft *A* angesaugt, und als Druckluft *B* der Retentatseite *5a* der Membraneinheit *5* zugeführt.

Zur Reduzierung der Kontamination der Hochtemperatur-Membran *5c* durch Verunreinigungen in dem heißen Roh-Rauchgas *Gₕ* wird eine Heißgasreinigung *10* zwischen Brenner (Brennkammer) und Membraneinheit *5c* geschaltet, wobei die Zirkulation durch ein Heißgasgebläse *11* unterstützt wird.

Die Figur 2 zeigt das Verfahrensschema des Clean-Konzepts der Siemens AG (siehe dazu auch: WO 2009/019218 A2 (Siemens AG). Die bekannte Verbrennungsanlage 1 " weist eine Brennkammer (Dampferzeugungsanlage) 2 mit einem vorgeschalteten Brenner 3 auf. In diesem wird ein Brennstoff F zusammen mit abgekühltem Sauerstoff I verbrannt, wobei das Wasser im Rohrsystem des Dampferzeugers (nicht dargestellt) zu Dampf mit einer hohen Temperatur umgewandelt wird. Das heiße Rohrauchgas G wird unter anderem über einen Wärmeaustauscher 12 abgekühlt und mit oder ohne eine kalte Reinigung dem Brenner 3, bzw. der Brennkammer *2,* wieder zugeführt. Somit entfallen gegenüber dem Oxycoal-Verfahren die langen Zirkulationswege des heißen Rauchgases zu und von der Membraneinheit.

Der Sauerstoff *C* für die Verbrennung stammt beim Clean-Konzept aus der Membraneinheit *5,* deren Retentatseite *5a* mit verdichteter Luft *B1* und *B2,* welche über einen Wärmeaustauscher *11,* bzw. *12* aufgeheizt wird, versorgt wird. Der Sauerstoff aus dieser Luft gelangt über die Membran *5c* und wird so von dieser abgetrennt. Die zur Aufrechterhaltung der erforderlichen Prozesstemperatur für die Hochtemperaturmembran benötigte Wärmemenge wird hierbei ausschließlich durch die zugeführte Luft *K* zur Verfügung gestellt. Dazu erfolgt die Aufheizung der verdichteten Luft *B1* durch das Rauchgas über den Wärmetauscher *12,* wobei die Luft auf Temperaturen von bis zu 1000 °C aufgeheizt werden kann. Ferner wird der aus der Membraneinheit *5* über ein Gebläse oder Vakuumpumpe *9* abgeführte und dem Brenner *3,* bzw. der Brennkammer *2,* zugeführte heiße Sauerstoff *C* durch einen mit verdichteter Luft *B2* gespülten Wärmeaustauscher *11* geleitet. Dabei wird einerseits der Sauerstoffstrom *C* auf eine ähnliche Temperatur abgesenkt, die auch das zirkulierte Rauchgas aufweist, andererseits wird die verdichtete Luft *B1* auf nahezu Betriebstemperatur der Hochtemperatur-Membran vorgewärmt. Die durch die Wärmeaustauscher *11* und *12* aufgeheizten Luftströme *K* werden zusammen der Membraneinheit 5 zugeführt.

Bei der ohne Spülung betriebenen Membraneinheit *5c* entfällt vorteilhaft die Notwendigkeit, die Membran vor Verunreinigungen aus dem Rauchgas schützen zu müssen. Die Triebkraft in der Membraneinheit wird durch den Druck auf der Feedseite und das Abführen des permeierten Sauerstoffs gewährleistet.

Die abgereicherte Luft *D* aus der Membraneinheit *5* wird, wie beim Oxycoal-Verfahren, anschließend einem Expander *8* zugeführt, der über eine Welle *6* mit dem Verdichter *7* gekoppelt ist, und als Abluft *E* an die Umgebung abgegeben. Über den Verdichter *7* wird Luft *A* angesaugt, und als Druckluft *B* der Retentatseite *5a* der Membraneinheit *5* zugeführt.

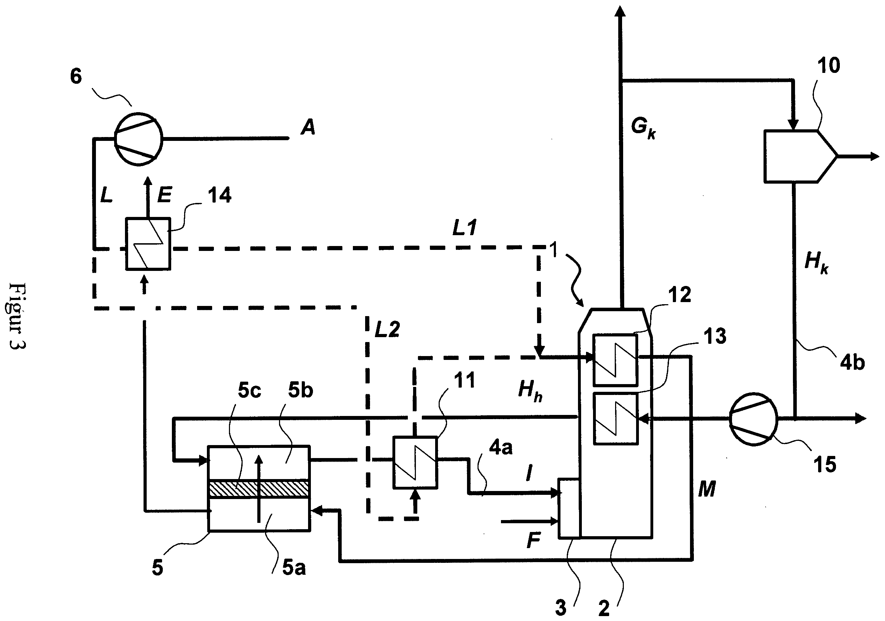

Die Figur 3 zeigt demgegenüber eine Ausfiihrungsform der erfindungsgemäßen Verbrennungsanlage *1*, bei der kohlenstoffhaltiger Brennstoff *F* in einer Rauchgas-Sauerstoff-Atmosphäre *I* mittels eines Brenners *3* in einer Brennkammer *2* verbrannt wird. Nach der Wärmenutzung des Rauchgases unter anderem durch die Wärmeaustauscher *12* und *13* wird das abgekühlte Rohrauchgas *Gₖ* über die Zirkulationsleitung *4b* zunächst einer Kaltgasreinigungsstufe *10* zugeführt. Das gereinigte, abgekühlte Rauchgas *Hₖ* gelangt mit Hilfe eines Gebläses *15* zurück in die Dampferzeugung, um dort im Wärmaustauscher *13* durch das Roh-Rauchgas erneut auf die Betriebstemperatur der Membraneinheit *5* aufgeheizt zu werden (*Hₕ*), in die es anschließend als Spülgas geleitet wird.

Der Sauerstoff *C* für die Verbrennung stammt wieder aus einer Membraneinheit *5*, deren Retentatseite *5a* mit vorgewärmter Luft bzw. sauerstoffangereicherter Luft *M,* versorgt wird. Der Sauerstoff *C* diffundiert dabei durch die Hochtemperaturmembran *5c* auf die Permeatseite *5b.*

Die zur Aufrechterhaltung der erforderlichen Prozesstemperatur für die Hochtemperatur-membran *5c* benötigte Wärmemenge wird bei der vorliegenden Erfindung einerseits durch die zugeführte Luft *M* auf der Retentatseite *5a* zur Verfügung gestellt, und andererseits durch das zuvor aufgeheizte zirkulierende Rauchgas *Hₕ* gewährleistet, welches als Spülgas der Permeatseite *5b* zugeleitet wird.
Die dazu benötigte Luft *A* kann dazu in zwei Teilströme *L1* und *L2* aufgeteilt werden, welche zunächst über die Wärmeaustauscher *11,* bzw. *14,* vorgewärmt werden. Sofern das Permeat heiß in den Brenner geleitet werden soll, ist der Wärmeaustauscher *11* nicht notwendig. Der Wärmeaustauscher *14* ist dabei geeignet, den Luftstrom auf bis zu 750 °C vorzuwärmen. Vor der Einleitung in die Membraneinheit *5* werden die zusammengeführten Ströme *M* = *L1* + *L2* durch den mit Rohrauchgas *G* durchströmten Wärmeaustauscher *12* weiter auf die Betriebstemperatur der Membraneinheit *5* vorgewärmt. Die abgereicherte Luft *E* aus der Membraneinheit *5* gelangt in die Umgebung, wobei deren Wärmeinhalt zuvor durch den Wärmeaustauscher *14* zumindest teilweise auf den frischen Teilluftstrom *L1* übertragen wird. Der Teilluftstrom *L2* wird durch den, mit Sauerstoff angereicherten Rauchgasstrom *I* durchströmten, Wärmeaustauscher *11* aufgewärmt.

Als weitere Option kann auch vorgesehen werden, dass der Hochtemperatur-Membran *5c* verdichtete Luft zugeführt wird.

Die Unterschiede in der Betriebsführung sind nachfolgend nochmals zusammengefasst.

| Merkmal | Oxycoal-AC-Konzept | Clean-Konzept von Siemens | Erfindung |
|---|---|---|---|
| Beaufschlagung der Rententatseite der HT-Membran | mit verdichteter, durch Rauchgas aufgeheizter Luft | mit verdichteter, aufgeheizter Luft | mit aufgeheizter Luft |
| Spülung der Permeatseite der HT-Membran | mit gereinigtem, rezirkuliertem, heißem Rauchgas | keine | mit gereinigtem, rezirkuliertem, aufgeheiztem Rauchgas |
| Aufrechterhaltung der Betriebstemperatur der Membran | durch gereinigtes, rezirkuliertes, heißes Rauchgas | durch aufgeheizte Luft | durch gereinigtes, rezirkuliertes, aufgeheiztes Rauchgas und durch aufgeheizte Luft |

## Patentansprüche

1. Verfahren zum Betreiben einer Verbrennungsanlage, bei dem kohlenstoffhaltiger Brennstoff in einer Sauerstoff-Rauchgas-Atmosphäre verbrannt wird,
- wobei der Sauerstoff zur Verbrennung aus Luft mittels einer Membraneinheit (5), umfassend eine Hochtemperatur-Membran (5c), hergestellt wird,
- wobei das Rauchgas (Gₖ) abgekühlt wird,
- wobei ein Teil des Rauchgases rezirkuliert wird,
- wobei das abgekühlte, rezirkulierte Rauchgas (Hₖ) zur Gewährleistung der erforderlichen Betriebstemperatur der Membran anschließend wieder aufgeheizt wird,
- wobei die Aufheizenergie durch einen Wärmeaustausch (13) mit Rauchgas des entsprechenden Temperaturniveaus des Verbrennungsprozesses gewonnen wird,
- und wobei das so aufgeheizte, rezirkulierte Rauchgas als Spülgas (Hₕ) der Membraneinheit zugeführt wird,
***dadurch gekennzeichnet,***
- **dass** der Membraneinheit (5) aufgeheizte Luft mit maximal 2 bar zugeführt wird und
- **dass** die Luft vor dem Eintritt in die Membraneinheit durch einen Wärmeaustausch (12) mit Rauchgas des entsprechenden Temperaturniveaus des Verbrennungsprozesses in oder außerhalb der Brennkammer auf die Betriebstemperatur der Membran aufgewärmt wird.

2. Verfahren nach Anspruch 1, bei dem die Luft zusätzlich in einem Wärmeaustauscher (14) durch die sauerstoffabgereicherte Abluft aus der Membraneinheit erwärmt wird.

3. Verfahren nach Anspruch 1, bei dem die Luft zusätzlich in einem Wärmeaustauscher (11) durch das sauerstoffangereicherte rezirkulierte Rauchgas erwärmt wird.

4. Verfahren nach einem der Ansprüche 1 bis 3, bei dem das abgekühlte, rezirkulierte Rauchgas einer Rauchgasreinigung (10) unterzogen wird.

5. Verfahren nach Anspruch 1 bis 4, bei dem mindestens ein Teil des Permeates (4ₐ) aus der Membraneinheit, bestehend aus dem rezirkulierten Rauchgas und dem permeierten Sauerstoff, der Verbrennung zugeführt wird.

6. Verfahren nach Anspruch 1 bis 5, bei dem die Membraneinheit (5) eine oder mehrere Hochtemperatur-Membranen umfasst.

7. Verfahren nach Anspruch 1 bis 6, bei dem anstelle von Luft eine sauerstoffangereicherte Luft verwendet wird.

8. Verfahren nach vorhergehendem Anspruch 7, bei dem die sauerstoffangereicherte Luft mittels einer Luftzerlegungsanlage und/oder mittels einer weiteren Membraneinheit erzeugt wird.

9. Verfahren nach einem der Ansprüche 7 bis 8, bei dem die erzeugte, sauerstoffangereicherte Luft mit Umgebungsluft verdünnt wird.

10. Verfahren nach einem der vorhergehenden Ansprüche 1 bis 9, bei dem die Luft und/ oder das abgekühlte, rezirkulierte Rauchgas zusätzlich extern auf die Membran-Betriebstemperatur erwärmt werden.

11. Verfahren nach einem der vorhergehenden Ansprüche 1 bis 10, bei dem das Permeat aus der Membraneinheit, bestehend aus dem zurückgeführten Rauchgas und dem permeierten Sauerstoff, mittels einer Pumpe gefördert wird.

12. Verbrennungsanlage (1) mit einem Brenner (3), einer Brennkammer (2) und einer durch eine Leitung (4a) mit dieser verbundenen Membraneinheit (5),
umfassend eine Hochtemperatur-Membran (5c) zur Gewinnung des Verbrennungssauerstoffes aus Luft,
wobei die Verbrennungsanlage (1) eine Kreislaufführung für abgekühltes rezirkuliertes Rauchgas (4a, 4b, Gₖ, Hₖ, Hₕ), die mit der Membraneinheit (5) strömungstechnisch verbunden ist, sowie eine in der Kreislaufführung für rezirkuliertes Rauchgas angeordnete Kaltgasreinigungsstufe (10) aufweist,
wobei in der Rauchgasleitung (4b) vor dem Eintritt in die Membraneinheit (5) und nach der Kaltgasreinigungsstufe (10) ein Wärmetauscher (13) zum Wärmeaustausch mit Rauchgas angeordnet ist, und
wobei die Rauchgasleitung (4b) strömungstechnisch nach dem Wärmetauscher (13) als Spülgasleitung mit der Permeatseite der Membran verbunden ist, wobei in der Zuführungsleitung für die Luft zur Membraneinheit (5) ein Wärmetauscher (12) in oder außerhalb der Brennkammer (2) angeordnet ist, in dem Luft mit Rauchgas des entsprechenden Temperaturniveaus des Verbrennungsprozesses auf die Betriebstemperatur der Membran aufgeheizt wird.

13. Verbrennungsanlage nach Anspruch 12, bei dem in der Zuführungsleitung für die Luft zum Wärmetauscher (12) ein weiterer Wärmetauscher (14) angeordnet ist, durch den die sauerstoffabgereicherte Abluft (E) aus der Membraneinheit (5) geführt wird.

14. Verbrennungsanlage nach Anspruch 12, bei dem in der Zuführungsleitung für die Luft zum Wärmetauscher (12) ein weiterer Wärmetauscher (11) angeordnet ist, durch den das sauerstoffangereicherte rezirkulierte Rauchgas (I) geführt wird.

## Claims

1. Method for operating a combustion plant, in which fuel containing carbon is burned in an oxygen flue gas atmosphere,
- in which the oxygen for combustion is produced from air by means of a membrane unit (5), comprising a high temperature membrane (5c),
- in which the flue gas (Gₖ) is cooled,
- in which a part of the flue gas is recirculated,
- in which the cooled, recirculated flue gas (Hₖ) is then heated again to ensure the necessary operating temperature of the membrane,
- in which the heating energy is obtained through a heat exchange (13) with flue gas at the corresponding temperature level of the combustion process,
- and in which the flue gas heated and recirculated in this way is supplied as purging gas (Hₕ) for the membrane unit,
***characterised in that***
- the membrane unit (5) is supplied with heated air at a maximum of 2 bars and
- the air is heated to the operating temperature of the membrane before entry into the membrane unit through a heat exchange (12) with flue gas at the corresponding temperature level of the combustion process in or outside the combustion chamber.

2. Method according to claim 1, in which the air is also heated in a heat exchanger (14) through the oxygen-depleted exhaust air from the membrane unit.

3. Method according to claim 1, in which the air is also heated in a heat exchanger (11) through the oxygen-enriched, recirculated flue gas.

4. Method according to one of claims 1 to 3, in which the cooled, recirculated flue gas is subject to flue gas cleaning (10).

5. Method according to claim 1 to 4, in which at least a part of the permeate (4ₐ) from the membrane unit, consisting of the recirculated flue gas and the permeated oxygen, is supplied for combustion.

6. Method according to claim 1 to 5, in which the membrane unit (5) comprises one or several high temperature membranes.

7. Method according to claim 1 to 6, in which oxygen-enriched air is used instead of air.

8. Method according to previous claim 7, in which the oxygen-enriched air is produced by means of an air separator plant and/or by means of a further membrane unit.

9. Method according to one of claims 7 to 8, in which the oxygen-enriched air produced is thinned with ambient air.

10. Method according to one of previous claims 1 to 9, in which the air and/or the cooled, recirculated flue gas is also heated externally to the membrane operating temperature.

11. Method according to one of previous claims 1 to 10, in which the permeate from the membrane unit, consisting of the flue gas fed back and the permated oxygen, is conveyed by means of a pump.

12. Combustion plant (1) with a burner (3), a combustion chamber (2) and a membrane unit (5) connected with this through a line (4a),
comprising a high temperature membrane (5c) for obtaining combustion oxygen from air, in which the combustion plant (1) has recirculation for cooled, recirculated flue gas (4a, 4b, Gₖ, Hₖ, Hₕ), which is connected flow technically with the membrane unit (5), as well as a cold gas cleaning stage (10) arranged in the recirculation for recirculated flue gas, in which a heat exchanger (13) for heat exchange with flue gas is arranged in the flue gas line (4b) before entry into the membrane unit (5) and after the cold gas cleaning stage (10) and
in which the flue gas line (4b) is connected flow technically with the permeate side of the membrane after the heat exchanger (13) as a purging gas line,
in which
a heat exchanger (12) is arranged in the supply line for the air for the membrane unit (5) in or outside the combustion chamber (2), in which air with flue gas at the corresponding temperature level of the combustion process is heated to the operating temperature of the membrane.

13. Combustion plant according to claim 12, in which a further heat exchanger (14) is arranged in the supply line for the air for the heat exchanger (12), through which the oxygen-depleted exhaust air (E) from the membrane unit (5) is supplied.

14. Combustion plant according to claim 12, in which a further heat exchanger (11) is arranged in the supply line for the air for the heat exchanger (12), through which the oxygen-enriched, recirculated flue gas (I) is supplied.

## Revendications

1. Procédé de fonctionnement d'une installation de combustion, où du combustible contenant du carbone est brûlé dans une atmosphère de gaz de fumée et d'oxygène,
- dans lequel l'oxygène est produit pour la combustion à partir de l'air au moyen d'une unité de membrane (5) comprenant une membrane à haute température (5c),
- dans lequel le gaz de fumée (Gₖ) est refroidi,
- dans lequel une partie du gaz de fumée est remise en circulation,
- dans lequel le gaz de fumée (Hₖ) remis en circulation refroidi est ensuite de nouveau chauffé pour la garantie de la température de fonctionnement requise de la membrane,
- dans lequel l'énergie de chauffage est obtenue par un échange de chaleur (13) avec du gaz de fumée du niveau de température correspondant du processus de combustion,
- et dans lequel le gaz de fumée remis en circulation ainsi chauffé est amené comme gaz de rinçage (Hₕ) à l'unité de membrane,
**caractérisé en ce que**
- de l'air chauffé avec maximum 2 bars est amené à l'unité de membrane (5) et
- l'air est chauffé avant l'entrée dans l'unité de membrane par un échange de chaleur (12) avec du gaz de fumée du niveau de température correspondant du processus de combustion dans ou en dehors de la chambre de combustion à la température de fonctionnement de la membrane.

2. Procédé selon la revendication 1, où l'air est en outre chauffé dans un échangeur de chaleur (14) par l'air évacué appauvri en oxygène de l'unité de membrane.

3. Procédé selon la revendication 1, où l'air est en outre chauffé dans un échangeur de chaleur (11) par le gaz de fumée remis en circulation enrichi en oxygène.

4. Procédé selon l'une quelconque des revendications 1 à 3, où le gaz de fumée remis en circulation, refroidi est soumis à un nettoyage de gaz de fumée (10).

5. Procédé selon la revendication 1 à 4, où au moins une partie du perméat (4ₐ) de l'unité de membrane se composant du gaz de fumée remis en circulation et de l'oxygène traversé est amenée à la combustion.

6. Procédé selon la revendication 1 à 5, où l'unité de membrane (5) comprend une ou plusieurs membranes à haute température.

7. Procédé selon la revendication 1 à 6, où un air enrichi en oxygène est utilisé à la place de l'air.

8. Procédé selon la revendication 7 précédente, où l'air enrichi en oxygène est généré au moyen d'une installation de séparation d'air et/ou au moyen d'une autre unité de membrane.

9. Procédé selon l'une quelconque des revendications 7 à 8, où l'air généré enrichi en oxygène est dilué avec de l'air ambiant.

10. Procédé selon l'une quelconque des revendications 1 à 9, où l'air et/ou le gaz de fumée refroidi remis en circulation est en outre chauffé à l'extérieur à la température de fonctionnement de membrane.

11. Procédé selon l'une quelconque des revendications 1 à 10, où le perméat est transporté de l'unité de membrane se composant du gaz de fumée ramené et de l'oxygène traversé au moyen d'une pompe.

12. Installation de combustion (1) avec un brûleur (3), une chambre de combustion (2) et une unité de membrane (5) reliée par une conduite (4a) à celle-ci,
comprenant une membrane à haute température (5c) pour l'obtention de l'oxygène de combustion de l'air,
dans laquelle l'installation de combustion (1) présente un guidage de circuit pour du gaz de fumée remis en circulation refroidi (4a, 4b, Gₖ, Hₖ, Hₕ) qui est relié en écoulement à l'unité de membrane (5), ainsi qu'un étage de nettoyage à air froid (10) agencé dans le guidage de circuit pour du gaz de fumée remis en circulation,
dans laquelle dans la conduite de gaz de fumée (4b) avant l'entrée dans l'unité de membrane (5) et après l'étage de nettoyage à gaz froid (10), un échangeur de chaleur (13) est agencé pour l'échange de chaleur avec du gaz de fumée, et
dans laquelle la conduite de gaz de fumée (4b) est reliée en écoulement après l'échangeur de chaleur (13) comme conduite de gaz de rinçage avec le côté de perméat de la membrane,
dans laquelle dans la conduite d'amenée pour l'air vers l'unité de membrane (5), un échangeur de chaleur (12) est agencé dans ou en dehors de la chambre de combustion (2), dans lequel l'air est chauffé avec du gaz de fumée du niveau de température correspondant du processus de combustion à la température de fonctionnement de la membrane.

13. Installation de combustion selon la revendication 12, où dans la conduite d'amenée pour l'air vers l'échangeur de chaleur (12), un autre échangeur de chaleur (14) est agencé, par lequel l'air évacué (E) appauvri en oxygène de l'unité de membrane (5) est guidé.

14. Installation de combustion selon la revendication 12, où dans la conduite d'amenée pour l'air vers l'échangeur de chaleur (12), un autre échangeur de chaleur (11) est agencé, par lequel le gaz de fumée (I) remis en circulation enrichi en oxygène est guidé.
